Europäisches Patentamt

European Patent Office

Office européen des brevets

(11) Numéro de publication: **0 226 518**
**A2**

## (12) DEMANDE DE BREVET EUROPEEN

(21) Numéro de dépôt: **86420251.0**

(22) Date de dépôt: **14.10.86**

(51) Int. Cl.⁴: **B 04 B 5/02**
**G 01 N 21/07**

(30) Priorité: **29.10.85 FR 8516255**

(43) Date de publication de la demande:
**24.06.87 Bulletin 87/26**

(84) Etats contractants désignés:
**BE CH DE ES GB IT LI**

(71) Demandeur: **KIS PHOTO INDUSTRIE (société anonyme)**
**21 avenue du Général de Gaulle**
**F-38100 Grenoble (FR)**

(72) Inventeur: **Simon, Jean Pierre**
**10 allée du Verderet**
**F-38100 Grenoble (FR)**

(74) Mandataire: **Laurent, Michel et al**
**20 rue Louis Chirpaz Boite Postale 32**
**F-69130 Lyon-Ecully (FR)**

(54) Dispositif de centrifugation pour boitiers d'analyses.

㉗ Dispositif de centrifugation pour barrettes d'analyses du type comprenant :
- une enceinte (35) fermée par un couvercle (2) :
- un plateau rotatif (9) et son moteur d'entrainement (13) :
- des moyens de maintien (16.17) des barrettes (15) placés sur la périphérie de ce plateau :
- un moyen (19. 20) pour faire pivoter sur elles-mèmes lesdites barrettes (15) .
caractérisé en ce que le moyen de pivotement comprend :
. un ensemble de deux doigts d'entrainement parallèles (19) solidaires l'un de l'autre. susceptible d'être actionné dans un mouvement ascendant :
. une couronne de pivotement présentant à sa partie inférieure une saillie en forme de croix de Malte. destinée à entrer en contact avec lesdits doigts d'entrainement (19)

FIG.1

EP 0 226 518 A2

**Description**

DISPOSITIF DE CENTRIFUGATION POUR BOITIERS D'ANALYSES

L'invention concerne un dispositif de centrifugation présentant un système automatique de pivotement de boitiers d'analyses,et notamment de barrettes d'analyses.

Dans la demande de brevet français n 84 19719 ,on a décrit un dispositif centrifugateur composé :
- d'un plateau central assurant la centrifugation , ce plateau étant muni d'une gorge diamétrale , destinée à recevoir une barrette d'analyses :
- d'une couronne périphérique,coplanaire et coaxiale avec le dit plateau central , destinée à tourner pas à pas,indépendemment du plateau central , et présentant une pluralité de logements radiaux pour des barrettes d'analyses ;
- d'un portique surmontant la dite couronne périphérique , permettant le passage d'une barrette :
. d'une part , de la couronne périphérique au plateau central , et inversement ;
. d'autre part , d'une première position à une seconde position , dans la gorge du plateau central .
Le dispositif comprend en outre un photomètre analyseur . L'inconvenient d'un tel dispositif réside dans le fait que l'on ne peut centrifuger qu'une seule barette à la fois . De plus , le dispositif se compose de trois éléments principaux différents , pour son fonctionnement à savoir :
. le plateau central ,
. la couronne périphérique ,
. le portique de transfert linéaire .
Enfin , le fonctionnement de l'appareil suppose un transfert linéaire de la barrette , en plus de la centrifugation , ce qui implique une perte de temps .

La présente invention a pour but de simplifier considérablement le travail de l'opérateur tout en optimisant le gain de temps, en diminuant au maximum les manipulations et les phases de fonctionnement mécanique .

Elle propose un dispositif de centrifugation pour barrettes d'analyses , du type comprenant :
- une enceinte fermée par un couvercle ;
- un plateau rotatif, destiné à recevoir les barrettes à centrifuger , et son moteur d'entrainement ;
- des moyens de maintien de barrettes d'analyses placés sur la périphérie du dit plateau rotatif ;
- un moyen destiné à faire pivoter sur elles-mêmes les dites barrettes d'analyses , autour de leur axe de pivotement , et ce afin d'inverser l'action de la force centrifuge au sein de ces dites barrettes .
Ce dispositif se caractérise en ce que le moyen de pivotement de la barrette comprend :
. un ensemble de deux doigts d'entrainement parallèles , solidaires l'un de l'autre , et susceptible d'être actionné dans un mouvement ascendant ;
. une couronne de pivotement , solidaire d'un axe soutenant le système de maintien de la barrette sur le plateau , la dite couronne présentant à sa partie inférieure une saillie en forme de croix de Malte,destinée à coopérer avec les dits doigts d'entrainement
.

En d'autres termes , l'invention concerne un dispositif permettant le pivotement automatique des barrettes d'analyses sur le plateau autour de leur axe de pivotement . en utilisant un système de poussoir à mouvement ascendant .

Avantageusement . en pratique :
- le dispositif de maintien de la barrette comprend un moyen d'indexage de la dite barrette . en deux positions de pivotement possibles situées à cent quatre vingt degrés (180 ) l'une de l'autre , constitué par :
. une saillie transversale horizontale. située sous le support de la barette ;
. une gorge en forme de V , destinée à recevoir la dite saillie , et ménagée au sein du plateau rotatif .
- le dispositf centrifugateur est commandé par un micro-ordinateur de façon à synchroniser les différentes phases mécaniques et physiques , à savoir :
. la centrifugation proprement dite ;
. le régime pas à pas, pour l'analyse photométrique;
. les phases de pivotement ;
. la régulation en température .
- le système d'actionnement des doigts d'entrainement est un éléctroaimant .
- le moteur d'entrainement du plateau fonctionne en régime continu , puis en régime pas à pas .
- l'enceinte et le couvercle sont réalisés en matière plastique ;
- le nombre de barrettes analysables simultanément varie entre un et cinq .
- les deux doigts d'entrainement sont écartés d'une distance comprise entre deux et cinq centimètres .

La façon dont l'invention peut être réalisée et les avantages qui en découlent ressortiront mieux de l'exemple qui suit, donné à titre indicatif et non limitatif à l'appui des figures annéxées .

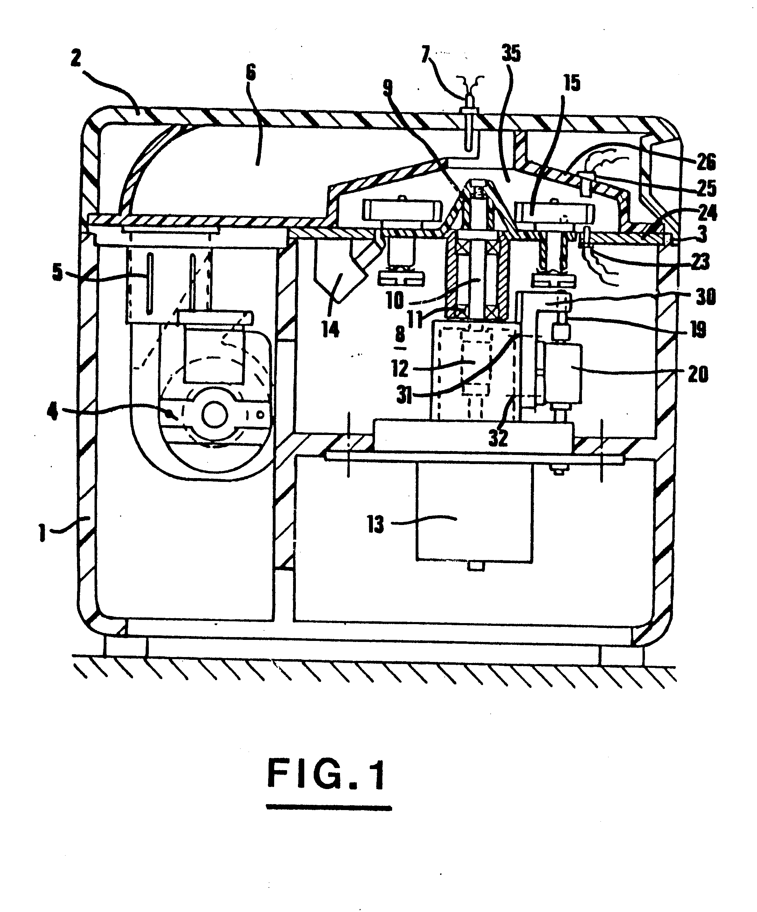

La Figure 1 est une vue générale simplifiée , en coupe du dispositif conforme à l'invention .

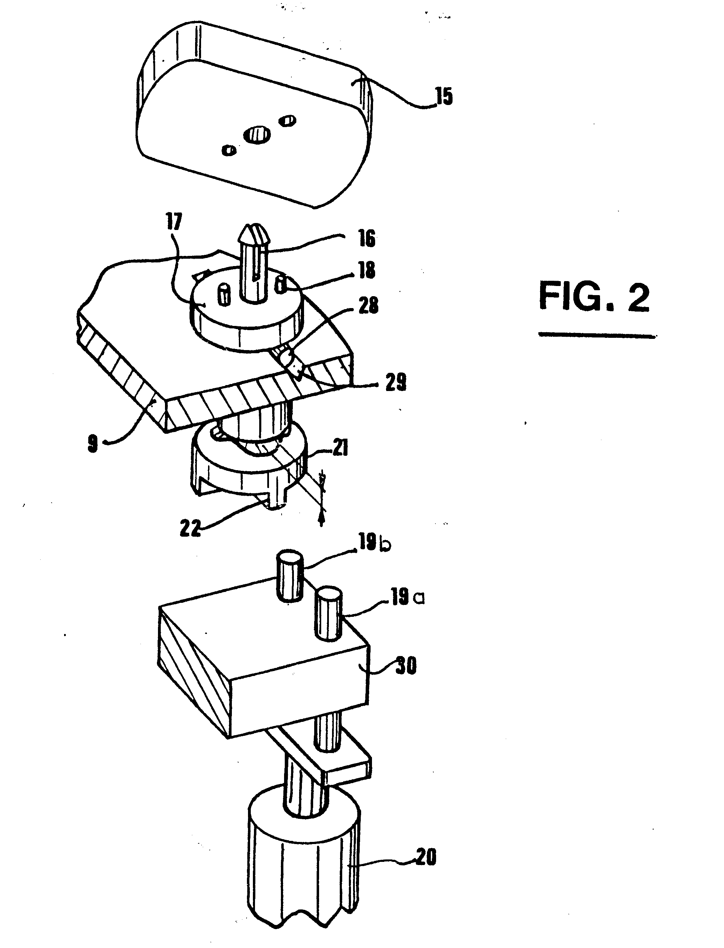

La Figure 2 est une vue en détail , en perspective du dispositif de pivotement .

La Figure 3 est une représentation schématique du système d'indexage , en position déverrouillée .

La Figure 4 est une représentation simplifiée d'un ensemble de cinq barrettes d'analyses en place sur le plateau rotatif .

Les Figures 5 à 10 illustrent le mode de fonctionnement du système de pivotement sur la couronne de pivotement .

Selon l'invention , le dispositif centrifugateur comprend un bati fixe (1) , en matière plastique , surmonté d'un couvercle (2) réalisé avec le même matériau.La fixation du couvercle (2) sur le bati (1) est obtenue à l'aide de chicane (3) permettant ainsi une étanchéïté à la lumière (obligatoire à cause des mesures photométriques), et une étanchéïté à l'air.

La régulation en température est assurée par un ventilateur (4) et une résistance chauffante (5) .L'air chaud est envoyé par le conduit (6) au niveau du plateau rotatif (9).Une sonde (7) , reliée au dispositif de régulation assure une constance de température au dixième de degré centrigrade près .

La centrifugeuse (8) est constituée du plateau (9) surmontant un axe de rotation (10) , reposant sur un pallier à roulement (11),et relié par l'intermédiaire d'un accouplement élastique (12) à un moteur (13).

Un dispositif magnétique (14) de detection de positionnement du plateau (9) est également prévu.

Les barrettes d'analyses (15) sont fixées par un système de clipsage mâle (16) sur le support (17) de la barrette (15) .le dit support présente deux ergots (18) , fixés sur sa face supérieure , et qui joue un double rôle , à savoir :

- soulever les bouchons de la barrette pour permettre lors de la centrifugation , l'écoulement des liquides ou réactifs :

- entrainement du pivotement .

Le dispositif de pivotement des barrettes (15) caractéristique de l'invention comprend deux doigts d'entrainement (19a,19b) , parallèles et solidaires l'un de l'autre , et écartés d'une distance de trois centimètres .Lors de leur actionnement , ils sont poussés par un éléctroaimant (20) en direction de la couronne de pivotement (21) , provoquant ainsi leur coopération avec la saillie (22) en croix de Malte . Leur cheminement est guidé par deux orifices cylndriques réalisés au sein d'un bati (30) , lui-même fixé en (31) et (32) au bati (33) qui soutient le plateau rotatif (9) l'axe de rotation (10) et l'accouplement élastique (12). De même l'éléctroaimant est fixé au dit bati (30) .

En fait , lorsque les doigts d'entrainement (19) ne sont pas sollicités ,un ressort élastique à lame (23) pousse vers le bas la couronne de pivotement (21) . Lorsque les doigts d'entrainement (19) sont actionnés , le plateau (9) tourne à vitesse réduite , suivant la flèche A , pendant un tour de façon à ce que toutes les barrettes présentes sur le plateau (9) subissent une rotation autour de leur axe de pivotement . Pour chaque barrette (15 ) , lorsque le premier doigt d'entrainement fixe (19a) entre en contact avec l'une des branches de la saillie en croix de Malte de la couronne de pivotement (21) , cela provoque une rotation de quatre vingt dix degrés (90°) de la barrette (15) .

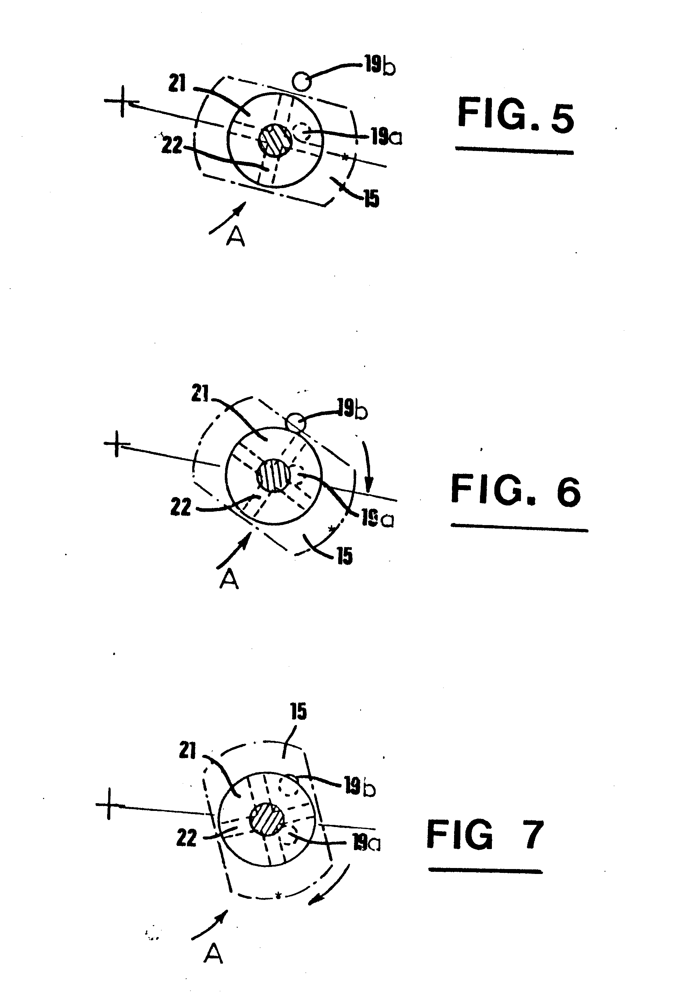

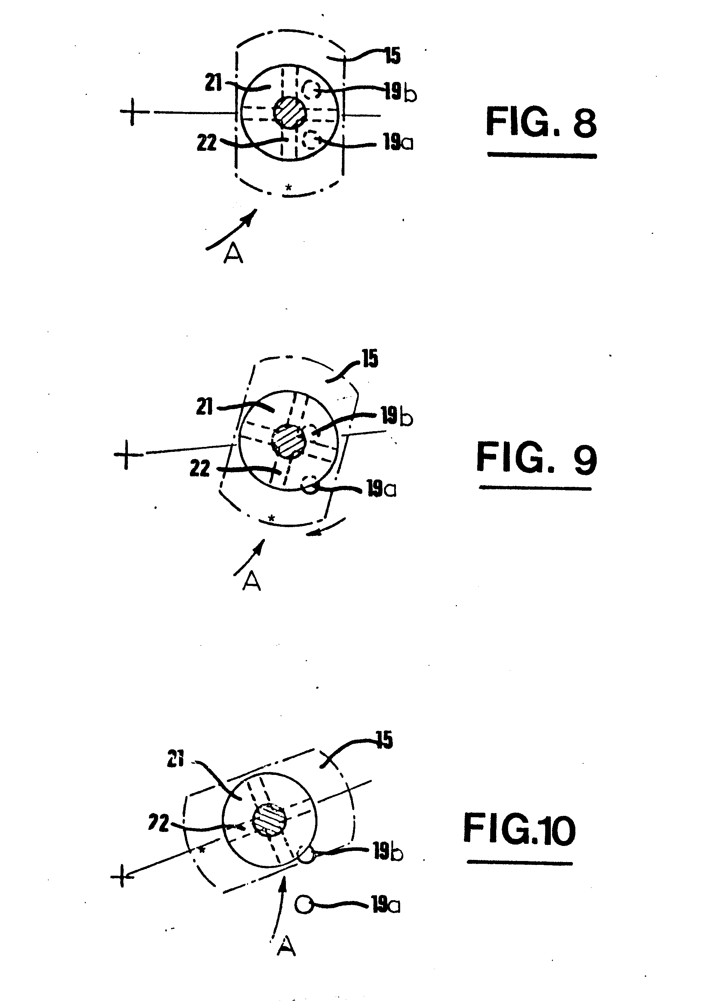

La branche précedente de la dite saillie de la couronne de pivotement (21) entre alors en contact avec le deuxième doigt d'entrainement fixe (19b) , provoquant ainsi , du fait que le plateau (9) tourne toujours , une nouvelle rotation de quatre vingt dix degrés (90 ) de la barrette autour de son axe de pivotement , d'où une rotation totale de cent quatre vingt degrés (180 ).(Voir Figures 5 à 10) .

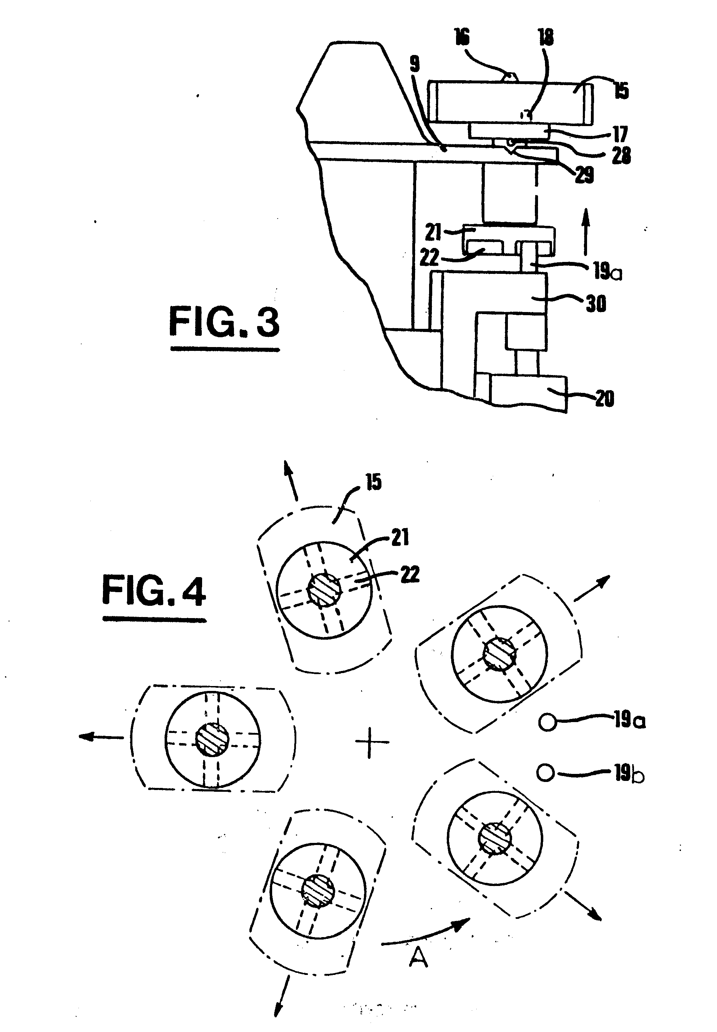

Il est à noter , qu'au cours de la phase de pivotement . lorsque les doigts d'entrainement (19) sont actionnés,et qu'ils entrainent la couronne de pivotement (21),ils provoquent le déplacement de la saillie (28) du support (17) , depuis la gorge en V (29) . du fait que le support (17) tourne , et lorsque les deux rotations de quatre vingt dix degrés sont effectuées , la saillie (28) revient se positionner dans la gorge (29) (Cf Figure 3) .

Les différentes parties mécaniques sont commandées par un micro-ordinateur, non représenté,qui joue le rôle de coordinateur et de synchronisateur des différentes étapes .

Lors d'une analyse d'un échantillon liquide , au moyen d'une barrette d'analyses et du dispositif décrit ci-dessus , après avoir clipsé la barrette (15) sur le support (17) au moyen du système de clipsage (16) , le plateau tourne pendant un certain laps de temps à une vitesse modérée , permettant la montée en température de l'enceinte . Ensuite , on procède à une phase de centrifugation .On revient à une vitesse lente pendant un tour pour permettre la phase de pivotement des barrettes sur elles-mêmes.Après une nouvelle phase de centrifugation , on agite les barrettes par un mouvement alternatif d'un quart de tour du plateau . Après une nouvelle phase de pivotement,puis de centrifugation , on passe en régime pas à pas , de façon à faire défiler les cellues de mesure devant le photomètre intégré . Celui-ci est constitué d'un filament optique (23) situé dans le bati intermédiaire (24),sous le passage de la barrette (15),et d'une cellule receptrice (25) , située au dessus du filament optique (23) , au sein du bati supérieur (26) au dessus de la barette .(15) .

Différents avantages se dégagent de la présente invention , à savoir :

- un dispositif simple et compact ;

- aucun transfert linéaire de barrettes ;

- possibilité d'analyser simultanément plusieurs barrettes.

## Revendications

1/ Dispositif de centrifugation pour barrettes d'analyses du type comprenant :

- une enceinte (35) fermée par un couvercle (2) ;

- un plateau rotatif (9) et son moteur d'entrainement (13) ;

- des moyens de maintien (16,17) des barrettes (15) , placés sur la périphérie de ce plateau ;

- un moyen (19, 20) pour faire pivoter sur elles-mêmes les dites barrettes (15) , autour de leur axe de pivotement ;

caractérisé en ce que le moyen de pivotement comprend :

. un ensemble de deux doigts d'entrainement parallèles (19a,19b) solidaires l'un de l'autre , susceptible d'être actionné dans un mouvement ascendant :

. une couronne de pivotement (21) sur laquelle repose un axe (27) soutenant les moyens de maintien (16,17) de la barrette (15) sur le plateau (9) , la dite couronne présentant à sa partie inférieure une saillie (22) en forme de croix de Malte , destinée à entrer en contact avec les dits doigts d'entrainement (19a,19b) .

2/ Dispositif selon la revendication 1 , caractérisé en ce qu'il possède un moyen d'indexage (28, 29) de la barette (15) , en deux positions de pivotement possibles situées à cent quatre vingt degrés (180 ) l'une de l'autre , comprenant une saillie (28) transversale horizontale fixée sous le système de maintien (16,17) de la barette (15) , et une gorge en forme de V (29) , destinée à recevoir la dite saillie (28) . et ménagée au sein du plateau rotatif (9) .

3/ Dispositif selon l'une des revendications 1 et 2 caractérisé en ce que le dispositif de centrifugation est commandée par un micro-ordinateur .

4/ Dispositif selon l'une des revendications 1 à 3 , caractérisé en ce que le système d'actionnement des doigts d'entrainement (19a.19b) est un éléctroaimant (20) .

5/ Dispositif selon l'une des revendications 1 à 4 . caractérisé en ce que le moteur d'entrainement (13) du plateau (9) fonctionne en régime continu puis en régime pas à pas .

6/ Dispositif selon l'une des revendications 1 à 5 . caractérisé en ce que l'enceinte (35) et le couvercle (2) sont réalisés en matière plastique.

7/ Dispositif selon l'une des revendications 1 à 6 , caractérisé en ce que le nombre de barrettes (15) analysables simultanément varie de un à cinq .

8/ Dispositif selon l'une des revendications 1 à 7 , caractérisé en ce que les doigts d'entrainements (19a et 19b) sont écartés d'une distance comprise entre deux et cinq centimètres .

## FIG.1

FIG. 2

0226518

FIG. 3

FIG. 4

0226518

FIG. 5

FIG. 6

FIG 7

0226518

FIG. 8

FIG. 9

FIG.10